# FASCICULE DE BREVET EUROPEEN

(11) **EP 1 792 110 B1**
(45) Date de publication et mention de la délivrance du brevet: **15.04.2009**
(21) Numéro de dépôt: 05802957.0
(22) Date de dépôt: 21.09.2005
(51) Int. Cl.: F16J 15/12

(54) **GARNITURE D'ETANCHEITE ET ASSEMBLAGE CORRESPONDANT**
STOPFBUCHSENDICHTUNG UND ENTSPRECHENDE ANORDNUNG
GLAND SEAL AND CORRESPONDING ASSEMBLY

(30) Priorité: 24.09.2004 FR 0410154
(43) Date de publication de la demande: 06.06.2007
(73) Titulaire: Saint-Gobain PAM, 54000 Nancy (FR)
(72) Inventeur: PERCEBOIS, Alain, F-54700 BLENOD LES PONT-A-MOUSSON (FR); MAIRE, François, F-54121 VANDIERES (FR); SCHNEIDER, André, F-54700 PONT A MOUSSON (FR); MARTIN, Roland, F-54200 TOUL (FR)
(74) Mandataire: Domenego, Bertrand
(86) Numéro de dépôt international: PCT/FR2005/002343
(87) Numéro de publication internationale: WO 2006/035141

(56) Documents cités:
- EP-A- 0 526 373
- EP-A- 0 552 123
- US-A1- 2003 107 214

## Description

La présente invention concerne un assemblage selon le préambule de la revendication 1. Un tel assemblage est divulgué par le document US-A-2003/0107214.

Elle s'applique notamment aux assemblages étanches et verrouillés de deux tuyaux en fonte.

Le document EP-A-526 373 décrit une garniture d'étanchéité composite comprenant un corps d'étanchéité et un talon d'ancrage en matière élastique ainsi qu'une pluralité d'inserts de verrouillage en matériau rigide noyés dans le talon d'ancrage. Ces inserts sont régulièrement répartis sur tout le pourtour du corps. Chaque insert est réalisé en métal et présente une tête d'ancrage destinée à prendre appui sur le fond d'une gorge d'ancrage ménagée dans un bout à emboîtement, ainsi que des dents d'accrochage adaptées pour venir s'engager dans la surface externe d'un bout uni de manière à empêcher des mouvements axiaux qui pourraient séparer le bout uni du bout à emboîtement.sous l'action des forces axiales engendrées par la pression du fluide circulant à travers le bout uni et le bout à emboîtement.

L'inclinaison de chaque insert de verrouillage est fonction du jeu entre le diamètre externe du bout uni et le diamètre interne du bout à emboîtement. L'accrochage de l'insert sur le bout uni induit une force de réaction dont l'angle d'inclinaison sur la direction médiane varie en fonction du jeu présent entre les bouts assemblés.

Plus cet angle de réaction, mesuré par rapport à la direction radiale, est élevé plus le verrouillage résiste à la pression interne du fluide circulant à travers l'assemblage. Par contre, l'accrochage des inserts dans la surface externe du bout uni est d'autant meilleur que cet angle de réaction est faible. En effet, si l'angle est trop élevé, les dents des inserts risquent de ne pas accrocher le bout uni lors de la mise en pression, et de glisser sur celui-ci en engendrant un verrouillage déficient.

Le risque d'avoir une mauvaise tenue en pression est critique vers les jeux maximaux où l'angle de réaction est naturellement faible, tandis que le risque d'avoir un mauvais accrochage des inserts est critique vers les jeux minimaux où cet angle de réaction est naturellement élevé.

Le but de l'invention, en partant de l'assemblage connu du document précité, est d'optimiser le compromis entre la fiabilité d'accrochage de l'insert sur le bout uni et la tenue en pression du verrouillage.

A cet effet, l'invention a pour objet un assemblage comprenant les caractéristiques de la revendication 1.

Selon des modes particuliers de réalisation, l'assemblage selon l'invention comprend l'une ou plusieurs des caractéristiques selon les revendications dépendantes.

L'invention sera mieux comprise à la lecture de la description qui va suivre, donnée uniquement à titre d'exemple et faite en se référant aux dessins annexés, sur lesquels :
- les Figures 1 à 3 sont des demi-vues en coupe méridienne d'un assemblage de deux tuyaux et d'une garniture d'étanchéité composite interposée entre eux, respectivement avant, pendant et après réalisation de l'assemblage verrouillé selon l'invention ;
- les Figures 4 et 5 sont des vues agrandies en coupe méridienne d'une partie de l'assemblage selon l'invention à des étapes différentes d'assemblage, le bout à emboîtement et le bout uni définissant un jeu minimal entre eux;
- les Figures 6 et 7 sont des vues agrandies en coupe méridienne d'une partie de l'assemblage selon l'invention à des étapes différentes d'assemblage, le bout à emboîtement et le bout uni définissant un jeu maximal entre eux; et
- la Figure 8 est une vue méridienne d'un insert de verrouillage selon une variante de l'invention.

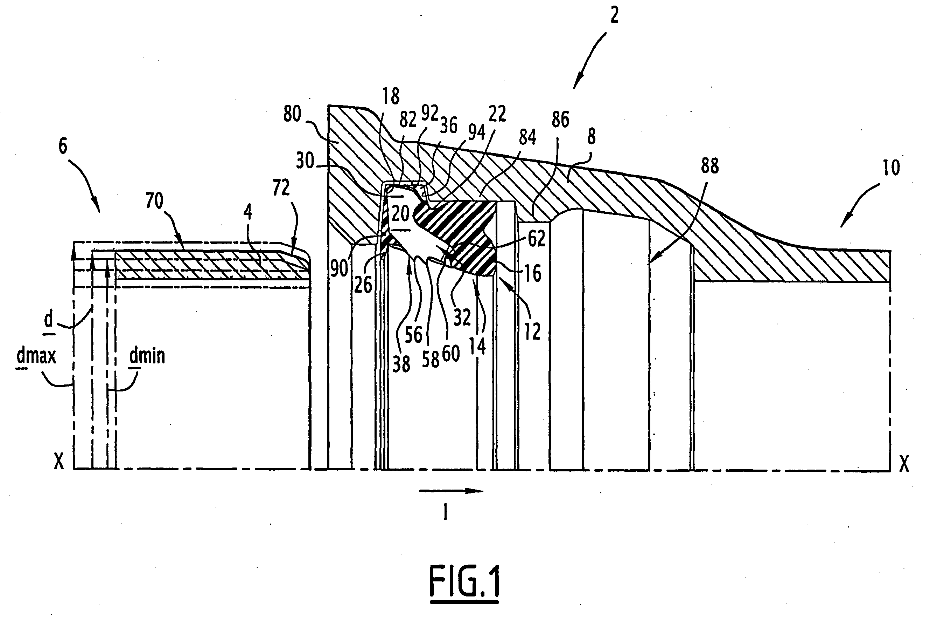

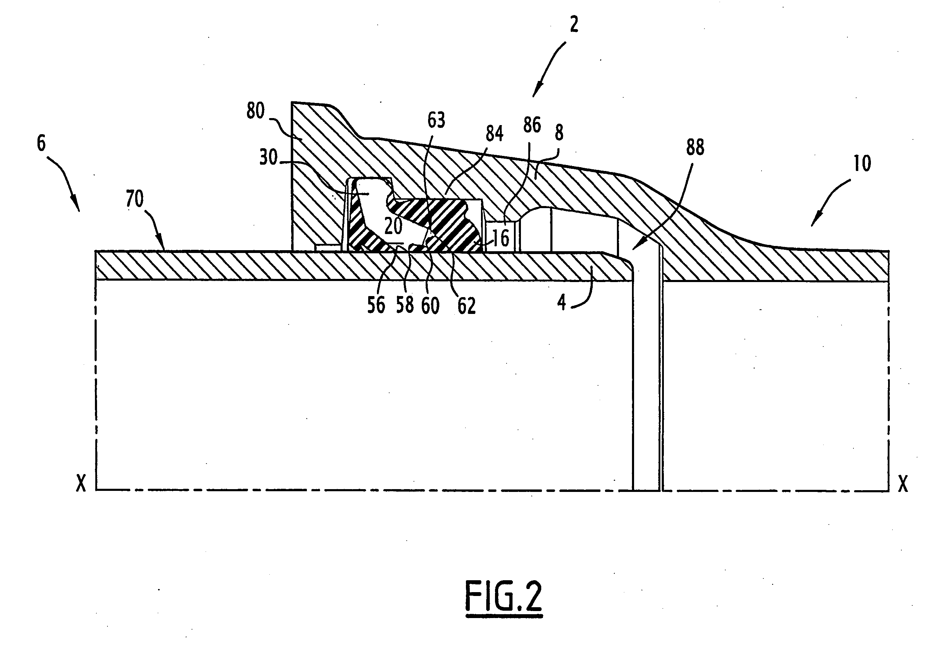

Sur les Figures 1 à 3 est représenté un assemblage étanche et verrouillé selon l'invention, désigné par la référence générale 2.

L'assemblage étanche 2 comprend un bout uni 4 ou bout mâle solidaire d'un premier tuyau 6, un bout à emboîtement 8 ou bout femelle solidaire d'un second tuyau 10, et une garniture d'étanchéité 12.

L'assemblage 2 s'étend suivant un axe central X-X. Dans ce qui suit, les expressions « radialement », « axialement », « circonférentiellement » et « méridienne » seront utilisées par rapport à cet axe.

La garniture d'étanchéité 12 comporte, en section méridienne, un anneau élastique 14 réalisé en matériau souple ou résilient, par exemple en élastomère, qui s'étend selon l'axe central X-X, dans lequel sont noyés une pluralité d'inserts de verrouillage 20.

L'anneau élastique 14 comprend un corps massif annulaire 16 vers le fond de l'emboîtement ainsi que, du côté de l'entrée de l'emboîtement, un talon d'ancrage 18 en saillie radialement vers l'extérieur et une lèvre circulaire d'étanchéité 26 en saillie radialement vers l'intérieur.

Le corps 16 et le talon 18 sont séparés par une gorge périphérique 22. Dans une variante de réalisation non représentée, cette gorge 22 peut être remplacée par des évidements alignés circonférentiellement avec les inserts.

La lèvre 26 s'étend sensiblement radialement vers l'axe X-X jusqu'au voisinage du diamètre interne minimum du corps 16. Les inserts 20 sont régulièrement répartis sur tout le pourtour de l'anneau 14. Chaque insert de verrouillage 20 est en matériau filé ou fritté de grande dureté, par exemple en alliage métallique dur ou en céramique.

Chaque insert 20 comprend, en vue méridienne, une tête radialement extérieure 30 et un pied radialement intérieur 32. La tête 30 s'étend sensiblement radialement par rapport à l'axe X-X, tandis que le pied 32 est incliné par rapport à cet axe, de telle sorte qu'il converge vers l'axe X-X dans un sens d'introduction I du bout uni 4 dans le bout à emboîtement 8. L'insert 20 présente ainsi un profil coudé.

Chaque insert 20 est noyé partiellement dans le talon d'ancrage 18 de la garniture 12 et recouvert partiellement par la matière élastique du talon 18. Toutefois, le talon 18 comporte des évidements 36 au droit des inserts 20. Les évidements 36 sont ouverts radialement vers l'extérieur, de telle sorte que l'extrémité radialement extérieure de la tête 30 est libre de matière élastique. Les évidements 36 sont également axialement ouverts dans le sens d'introduction I.

De même, la garniture d'étanchéité 12 comprend des évidements 38, ouverts radialement vers l'intérieur, et situés à l'emplacement des inserts 20, de telle sorte que l'extrémité radialement intérieure des pieds 32 est libre de matière élastique.

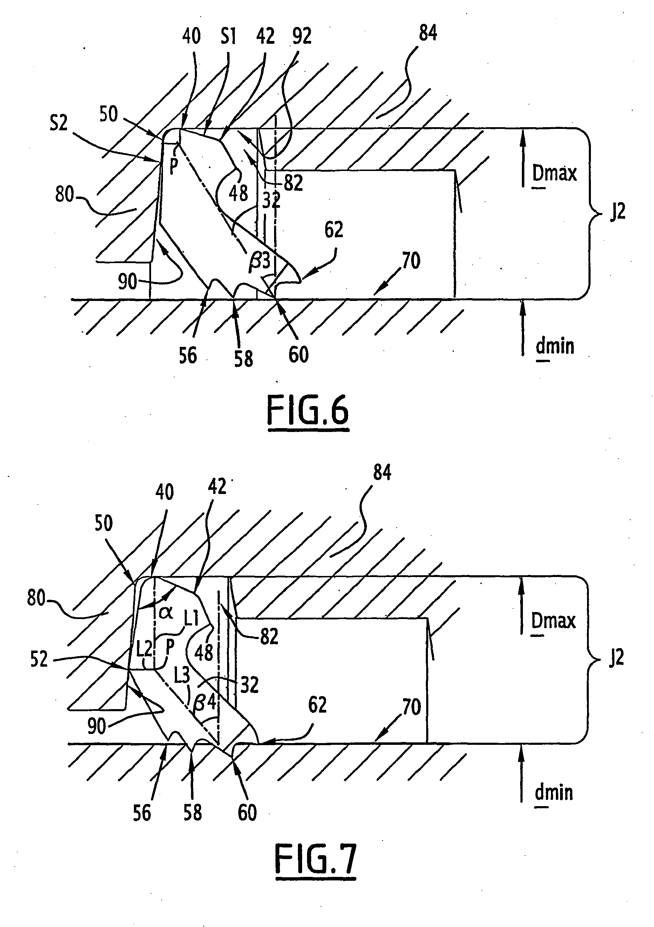

Comme on le voit plus précisément sur la Figure 6, la tête 30 comprend à son extrémité radialement extérieure un profilé constituant deux saillies radiales 40, 42 qui sont axialement décalées l'une de l'autre. La tête 30 comprend en outre un bec de retenue 48 à arête vive dirigé axialement dans le sens I. Le bec 48 est libre de matière élastique grâce à l'évidement 36.

La tête 30 comprend en outre deux saillies frontales 50, 52 radialement décalées l'une de l'autre et s'étendant sensiblement parallèlement à l'axe central X-X.

Une surface sensiblement plane S1 s'étend entre les deux saillies radiales 40, 42 et une surface sensiblement plane S2 s'étend entre les deux saillies frontales 50, 52. Ces surfaces S1, S2 forment entre elles un angle α qui est inférieur à 90°.

Par ailleurs, le pied 32 comprend à son extrémité radialement intérieure trois dents d'accrochage 56, 58, 60 décalées axialement qui sont adaptées pour s'accrocher sur la surface extérieure 70 du bout uni 4 (voir ci-après) et qui, lorsque la garniture est à l'état de repos, s'étendent en dehors de l'anneau élastique 14. En vue méridienne, les dents 56, 58, 60 s'étendent sur une courbe C convexe. Par ailleurs, le pied 32 comporte, du côté axial opposé à la tête 30, une butée d'accrochage 62 noyée dans le corps 16. La butée d'accrochage 62 a, en vue méridienne, un profil qui est arrondi par rapport au profil des dents d'accrochage 56, 58, 60.

La butée 62, qui a pour fonction de limiter la pénétration de l'insert 20 dans le bout uni 4 afin de ne pas détériorer celui-ci, présente la forme arrondie ou bombée afin de favoriser « l'écoulement » de l'élastomère lors de l'emboîtage du bout uni 4, ceci de manière à éviter les concentrations de contraintes qui pourraient provoquer des déchirures dans l'élastomère. Avantageusement, les faces latérales 63 de la butée 62 de l'insert en vue axiale sont chanfreinées ou arrondies de manière à éviter des arêtes vives susceptibles là encore de déchirer l'élastomère lors de l'emboîtage.

En se référant à nouveau à la Figure 1, on voit que le bout uni 4 comprend une surface extérieure cylindrique 70 de diamètre d munie d'un chanfrein d'entrée 72. Le bout uni 4 est fabriqué avec des tolérances diamétrales de telle sorte que le diamètre d réel peut être situé entre un diamètre extérieur maximal dₘₐₓ et un diamètre extérieur minimal dₘᵢₙ. Les diamètres dₘₐₓ et dₘᵢₙ sont indiqués en traits mixtes sur la Figure 1.

Le bout à emboîtement 8 comporte successivement, en allant axialement de l'entrée de l'emboîtement vers le fond, un collet d'entrée 80, une gorge d'ancrage annulaire 82 servant de logement au talon d'ancrage 18 de la garniture, une partie étagée 84, un bourrelet interne 86 et une cavité de réception 88, recevant librement l'extrémité du bout uni 4.

La gorge d'ancrage annulaire 82 est délimitée par une surface frontale annulaire 90 du collet d'entrée 80, par une surface de fond cylindrique 92 à section circulaire d'axe X-X, ainsi que par une surface frontale 94 de la partie étagée 84. De manière générale, la surface frontale 90 s'étend suivant un angle d'au moins 80° par rapport à l'axe central X-X et a une composante axiale dirigée dans le sens I. De préférence, la surface frontale 90 réalise un angle d'au moins 85° avec l'axe X-X. Par ailleurs, la surface frontale annulaire 90 se raccorde directement à la surface de fond 92, de telle sorte que, pour tout jeu entre les surfaces 70 et 92 compris dans la gamme des tolérances admises, l'insert 20 s'applique contre la surface frontale 90 et contre la surface de fond 92 lorsque les tuyaux sont soumis à la pression interne du fluide qu'ils véhiculent.

Par ailleurs, la surface frontale annulaire 90 et la surface de fond 92 définissent entre elles un angle qui est supérieur à l'angle α entre les surfaces planes S1 et S2.

La surface frontale 94 est dirigée vers le collet d'entrée 80, à l'encontre du sens I.

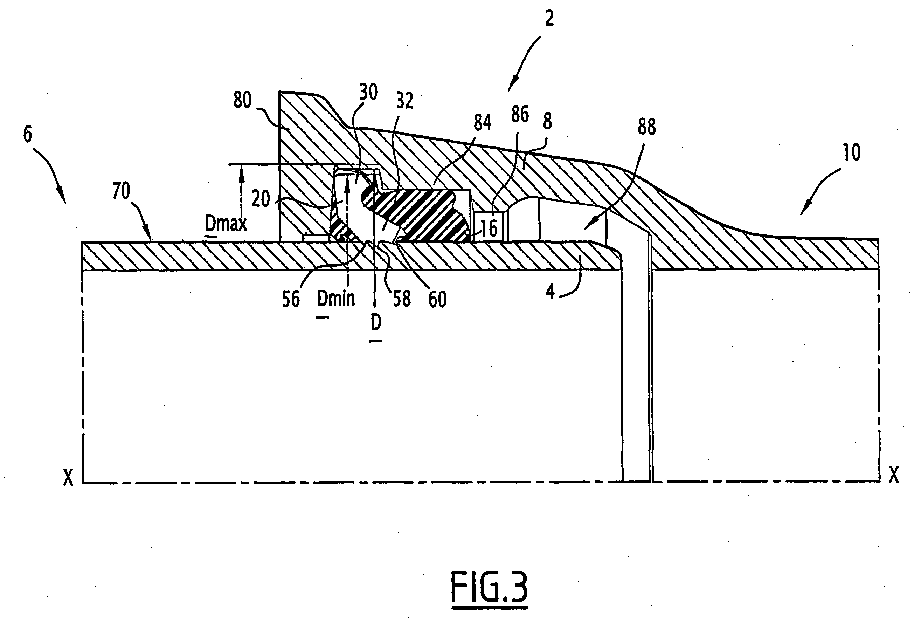

Comme indiqué sur la Figure 3, la surface de fond 92 est également soumise à des tolérances de fabrication, de telle sorte que son diamètre D réel peut varier entre un diamètre maximal Dₘₐₓ et un diamètre minimal Dₘᵢₙ.

Le montage de l'assemblage selon l'invention est effectué de la manière suivante.

La garniture d'étanchéité 12 est tout d'abord introduite dans le bout à emboîtement 8, le corps 16 s'appliquant contre la partie étagée 84 et le talon d'ancrage 18 prenant place dans la gorge d'ancrage annulaire 82, de telle sorte que l'axe de la garniture 12 est confondu avec celui du bout à emboîtement.

Puis le bout uni 4 est aligné avec l'emboîtement et est introduit à travers la garniture 12 selon le sens I en repliant d'abord la lèvre 26 qui s'applique avec une certaine pression sur la surface externe 70. Lorsque le bout uni 4 franchit le seuil des inserts 20, ceux-ci s'inclinent par débattement angulaire à l'encontre du corps 16. L'introduction du bout uni 4 est poursuivie jusqu'à ce que son chanfrein 72 arrive à proximité du fond de la cavité 88. Puis le bout uni 4 est ramené axialement en arrière de manière à provoquer le rebroussement des inserts 20. Les inserts 20 modifient leur inclinaison par rapport à l'axe X-X par un débattement angulaire inverse du précédent et de faible amplitude. Lors de ce rebroussement, au moins une des dents 56, 58, 60 s'accroche sur la surface externe 70 du bout uni 4 et offre alors une sensible résistance à la continuation du mouvement axial de retrait du bout uni 4. Le verrouillage de l'assemblage est ainsi réalisé.

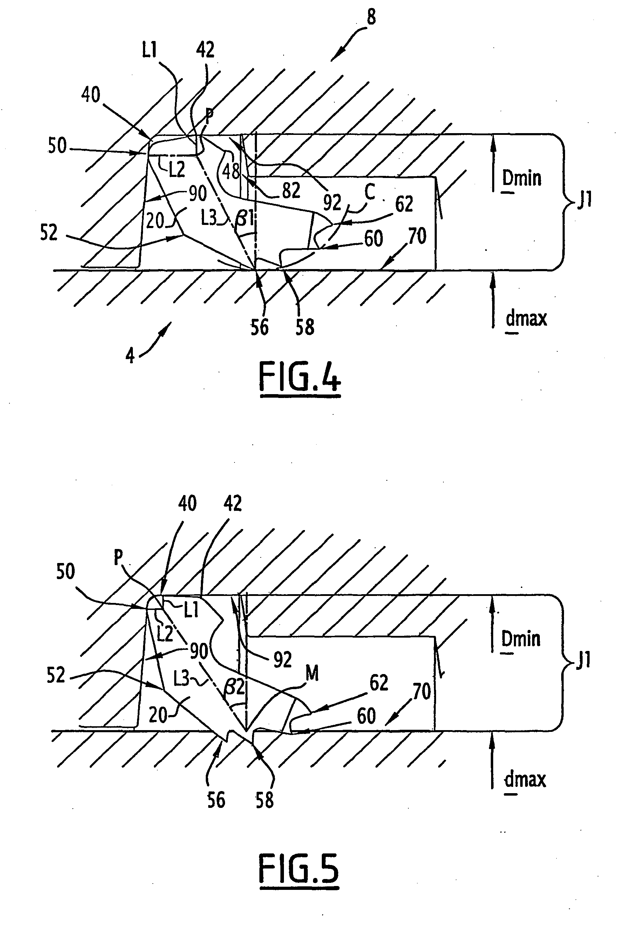

Par la suite, en se référant aux Figures 4 à 7, il sera décrit le fonctionnement de la garniture d'étanchéité selon l'invention en fonction des tolérances diamétrales sur les diamètres d et D sous l'action du fluide sous pression. Sur ces Figures, l'anneau 14 a été omis pour une meilleure clarté de représentation.

Après le débattement angulaire précité des inserts 20 lors de l'assemblage des tuyaux 6 et 10, chaque insert 20 prend une position d'inclinaison qui varie en fonction du jeu présent entre les diamètres d et D.

Sur la Figure 4 est représentée la position d'un insert 20 lors de l'accrochage sur le bout uni 4 à la mise en pression dans le cas où le jeu entre les tuyaux est un jeu minimal J1. A cet effet, le bout à emboîtement 8 comprend une gorge d'ancrage 82 dont le diamètre D correspond au diamètre minimal Dₘᵢₙ, tandis que le bout uni 4 a une surface 70 dont le diamètre extérieur d correspond au diamètre maximal dₘₐₓ. Les deux diamètres Dₘᵢₙ et dₘₐₓ définissent ainsi un jeu J1 minimal entre les deux surfaces 92 et 70.

On voit que, lors de l'accrochage sur le bout uni 4, l'insert 20 s'applique en deux points contre la gorge 82, d'une part avec sa deuxième saillie radiale 42 contre la surface de fond 92 et d'autre part avec sa première saillie frontale 50 contre la surface frontale 90. De plus, seule la dent d'accrochage 56 la plus proche de l'entrée d'emboîtement s'applique contre la surface extérieure 70.

L'insert 20 est incliné suivant un angle de réaction qui est défini de la manière suivante. En vue méridienne, les deux lignes L1, L2 qui s'étendent perpendiculairement aux surfaces 92, 90 au niveau de saillies respectives 42, 50 d'application de l'insert 20 contre la gorge 82, se coupent en un point P. Le point d'application de la dent 56 sur la surface 70 définit avec le point P une troisième ligne L3 servant de support à la force de réaction de l'insert 20. L'angle β1 mesuré entre cette ligne L3 et un plan perpendiculaire à l'axe X-X est appelé « angle de réaction ».

L'accrochage de l'insert 20 est d'autant meilleur que l'angle de réaction est faible. Grâce à la présence de la deuxième saillie radiale 42, plus proche axialement de la dent 56 que ne l'est la première saillie radiale 40, le point P se trouve dans une position qui est axialement relativement proche de la dent 56, de telle sorte que l'angle β1 est faible pour le jeu J1 donné, ce qui favorise l'accrochage de l'insert de verrouillage 20 sur la surface 70.

Sur la Figure 5 est représentée la partie de l'assemblage de la Figure 4 lorsque la pression est établie.

On voit que, après l'accrochage de l'insert 20, celui-ci a basculé dans le sens horaire par rapport à la Figure 4, et que les trois dents d'accrochage 56, 58, 60 pénètrent à présent dans la matière du bout uni 4.

L'insert de verrouillage 20 ne s'applique plus avec sa deuxième saillie radiale 42 contre la surface de fond 92, mais s'applique à présent exclusivement avec sa première saillie radiale 40 contre la surface 92, et exclusivement avec sa première saillie frontale 50 contre la surface frontale 90.

Le point P est la section des lignes L1, L2 des normales aux surfaces 92, 90 au niveau des saillies 40, 50.

L'assemblage définit une ligne L3, qui s'étend entre le point P et un point M situé à mi-distance axiale entre les dents d'accrochage 56 et 60.

La ligne L3 définit avec la direction radiale un angle de réaction β2 qui est ainsi relativement grand pour le jeu J1 donné, ce qui conduit à une bonne tenue en pression de l'assemblage verrouillé.

Il est à noter que, lors du basculement de l'insert 20 lors de la mise en pression, la perte de contact au niveau de la deuxième saillie radiale 42 permet d'augmenter l'angle de réaction et entre autres de compenser ainsi la diminution d'angle de réaction résultant du basculement de l'insert dans le sens horaire ; on aboutit de ce fait à un angle β2 suffisamment grand pour garantir une bonne tenue en pression.

La Figure 6 montre un assemblage analogue à celui de la Figure 4 avec les différences suivantes.

La surface 92 a un diamètre Dₘₐₓ, tandis que la surface 70 a un diamètre dₘᵢₙ, de telle sorte que ces deux surfaces définissent entre elles un jeu J2 qui est supérieur au jeu J1. Ce jeu J2 est le jeu maximal admis pour des tolérances de fabrication du bout uni 4 et du bout à emboîtement 8.

On voit que, lors de l'accrochage sur le bout uni 4 à la mise en pression, l'insert 20 s'applique en deux points contre la gorge 82, d'une part avec sa première saillie radiale 40 contre la surface de fond 92 et d'autre part avec sa première saillie frontale 50 contre la surface frontale 90. De plus, seule la dent d'accrochage 60 la plus éloignée de l'entrée d'emboîtement s'applique contre la surface extérieure 70.

L'angle de réaction β3 obtenu est mesuré entre la direction radiale et une ligne passant par le point P, sensiblement identique à celui de l'assemblage de la Figure 5, et par le point de contact entre la surface 70 et la dent 60. Cet angle β3 est faible et donc compatible avec un bon accrochage de l'insert 20.

La Figure 7 montre l'assemblage de la Figure 6 une fois la pression établie, donc après accrochage de l'insert 20 et après basculement de celui-ci dans le sens horaire.

A l'issue de ce basculement, l'insert 20 s'applique exclusivement avec sa première saillie radiale 40 contre la surface de fond 92 et exclusivement avec sa deuxième saillie frontale 52 contre la surface frontale 90, tandis que les autres saillies 42 et 50 sont hors de contact avec les surfaces 90 et 92. De plus, seules la dent intermédiaire 58 et la dent 60 la plus éloignée de l'entrée d'emboîtement s'accrochent dans la surface 70 du bout uni 4.

A jeu maximal J2, le contact au niveau de la deuxième saillie frontale 52 permet d'augmenter l'angle de réaction et entre autres de compenser la diminution d'angle de réaction résultant du basculement de l'insert dans le sens horaire lors de la mise en pression ; on obtient ainsi, grâce à cette saillie 52 qui génère un point P se situant à proximité de l'axe X-X, un angle de réaction β4 final suffisamment grand pour garantir une bonne tenue en pression de l'assemblage verrouillé.

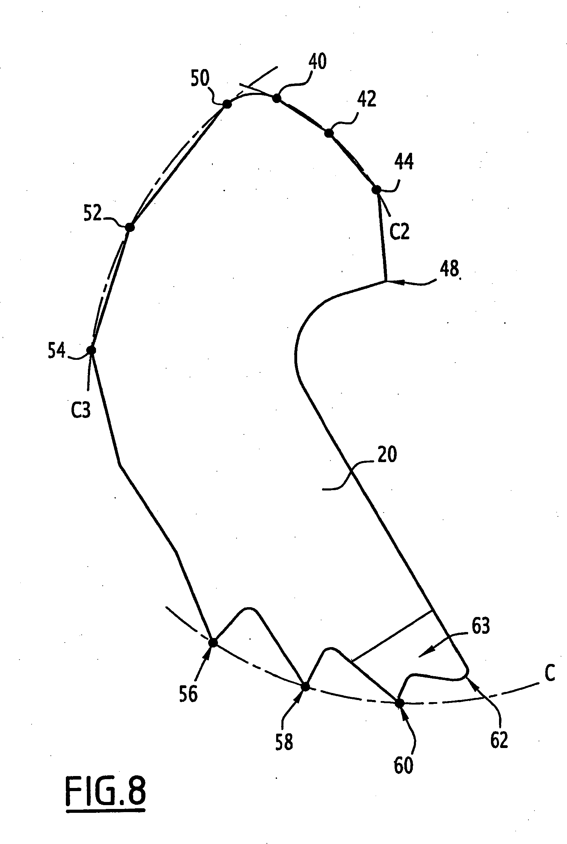

Sur la Figure 8 est representée une variante de l'insert 20 selon l'invention.

Dans ce qui suit, uniquement les différences par rapport à l'insert 20 précédemment décrit seront mentionnées. Les éléments analogues portent les mêmes références.

Cet insert de verrouillage 20 comporte trois saillies radiales 40, 42, 44 qui sont axialement décalées, et qui s'étendent, en vue méridienne, sur une courbe convexe C2.

En outre, l'insert de verrouillage 20 comporte trois saillies frontales 50, 52, 54 décalées radialement par rapport à l'axe X-X, et situées, en vue méridienne, sur une courbe convexe C3.

Grâce aux caractéristiques géométriques des inserts 20, la garniture précitée conduit a un bon compromis entre l'accrochage des inserts sur le bout uni et la tenue en pression, indépendamment du jeu réel existant entre les surfaces 70 et 92.

En outre, les évidements 36 fiabilisent l'appui des inserts 20 vers les jeux minimaux, en réduisant l'effort d'emboîtage du bout uni 4 et en évitant les contraintes de compression dans l'élastomère susceptibles d'engendrer un mauvais positionnement des inserts 20 par basculement dans un sens tendant à augmenter l'angle de réaction (et donc à nuire au bon accrochage des inserts 20 à jeu minimal). De plus, en combinaison avec la gorge 22, les évidements 36 facilitent la déformation globale de l'anneau 14 lors de sa mise en place de la garniture dans le bout à emboîtement.

## Revendications

1. Assemblage étanche et verrouillé, du type comprenant
- un bout uni (4) d'un premier élément de canalisation, qui comprend une surface extérieure cylindrique (70),
- un bout à emboîtement (8) d'un second élément de canalisation, et
- une garniture d'étanchéité composite pour l'assemblage étanche et verrouillé entre le bout uni (4) et le bout à emboîtement (8),
le bout à emboîtement (8) comprenant une gorge d'ancrage (82) qui est délimitée par une surface de fond (92), s'étendant sensiblement parallèlement à un axe central (X-X), et, du coté de l'entrée de l'emboîtement, une surface frontale annulaire (90),
la garniture d'étanchéité comprenant
- un anneau (14) en matière élastique s'étendant selon l'axe central (X-X), ayant un corps (16), comprimé radialement entre le bout à emboîtement (8) et le bout uni (4), et ayant un talon d'ancrage (18) logé dans la gorge d'ancrage (82), et
- plusieurs inserts de verrouillage (20) en matière rigide noyés au moins partiellement dans le talon d'ancrage (18),
chaque insert de verrouillage (20) comprenant une tête (30) radialement extérieure, noyée au moins partiellement dans le talon d'ancrage (18) et destinée à s'appliquer dans la gorge d'ancrage (82) ainsi qu'un pied (32) radialement intérieur, destiné à s'appliquer contre le bout uni (4), la tête (30) comprenant une première saillie radiale (40, 42), adaptée pour s'appliquer contre la surface de fond (92) de la gorge d'ancrage (82), et des première et deuxième saillies frontales (50, 52), adaptées pour s'appliquer contre la surface frontale annulaire (90),
la deuxième saillie frontale (52, 50) étant décalée radialement de la première saillie frontale (50, 52),
la surface frontale annulaire (90) se raccordant directement à la surface de fond (92), **caractérisé en ce que** pour tout jeu entre les surfaces extérieure (70) et de fond (92) compris dans une gamme de tolérances admises, l'insert (20) s'applique contre la surface frontale (90) et contre la surface de fond (92) lorsque le bout uni (4) et le bout à emboîtement (8) sont soumis à la pression interne du fluide.

2. Assemblage selon la revendication 1, **caractérisé en ce que** la tête (30) comprend au moins une troisième saillie frontale (54), décalée radialement des première et deuxième saillies frontales et adaptée pour s'appliquer contre la surface frontale annulaire (90) de la gorge d'ancrage (82).

3. Assemblage selon l'une des revendications 1 ou 2, **caractérisé en ce que** la tête (30) comprend au moins une deuxième saillie radiale (42, 40), décalée axialement de la première saillie radiale (40, 42) et adaptée pour s'appliquer contre la surface de fond (92) de la gorge d'ancrage (82).

4. Assemblage selon la revendication 3, **caractérisé en ce que** la première (50, 52) et la deuxième (52, 50) saillies frontales sont reliées par une première surface plane et la première (40, 42) et la deuxième (42, 40) saillies radiales sont reliées par une deuxième surface plane, et **en ce que** l'angle (α) entre ces deux surfaces est inférieur à 90°.

5. Assemblage selon la revendication 4, **caractérisé en ce que** la surface frontale annulaire (90) et la surface de fond (92) définissent entre elles un angle qui est supérieur à l'angle entre la première surface plane et la deuxième surface plane.

6. Assemblage selon la revendication 5, **caractérisé en ce que** la surface de fond est cylindrique (92), notamment s'étendant coaxialement par rapport à l'axe central (X-X), et la surface frontale annulaire (90) est formée par un collet d'entrée (80) du bout à emboîtement (8), la surface frontale annulaire (90) ayant une composante axiale dirigée dans le sens d'introduction (I) du bout uni (4) dans le bout à emboîtement (8).

7. Assemblage selon la revendication 5 ou 6, **caractérisé en ce que** la surface frontale annulaire (90) s'étend suivant un angle d'au moins 80° par rapport à l'axe central (X-X).

8. Assemblage selon l'une quelconque des revendications 1 à 7, **caractérisé en ce que,** vu en coupe méridienne selon l'axe central (X-X), le pied (32) comprend au moins deux dents d'accrochage (56, 58, 60) adaptées pour s'accrocher sur la surface extérieure (70) du bout uni (4) et s'étendant en dehors de l'anneau (14).

9. Assemblage selon l'une quelconque des revendications 1 à 8, **caractérisé en ce que** le pied (32) comporte une butée d'accrochage (62) qui est noyée dans le corps (16) et qui est disposée du côté axialement opposé à la tête (30).

10. Assemblage selon la revendication 9, **caractérisé en ce que** la butée d'accrochage (62) a, vu en coupe méridienne selon l'axe central (X-X), un profil qui est plus arrondi que le profil des dents d'accrochage (56, 58, 60).

11. Assemblage selon la revendication 9 ou 10, **caractérisé en ce que** la butée d'accrochage (62) comporte des surfaces latérales (63) qui sont, en vue axiale selon l'axe central (X-X), chanfreinées ou arrondies.

12. Assemblage selon l'une quelconque des revendications 1 à 11, **caractérisé en ce que** l'anneau (14) comprend au moins un évidement (36) au droit d'un insert de verrouillage (20), et **en ce que** l'évidement (36) est ouvert radialement vers l'extérieur de telle sorte qu'une extrémité radiale de la tête (30) est libre de matière élastique.

13. Assemblage selon la revendication 12, **caractérisé en ce que** la tête (30) de chaque insert de verrouillage (20) comprend un bec de retenue (48) dirigé axialement à l'opposé de la première saillie frontale (50, 52), et **en ce que** l'évidement (36) est axialement ouvert de telle sorte que le bec de retenue (48) est libre de matière élastique.

14. Assemblage selon l'une quelconque des revendications 1 à 13, **caractérisé en ce que** le talon d'ancrage (18) et le corps (16) sont séparés par au moins un creux, notamment une gorge périphérique (22) ou des évidements alignés circonférentiellement avec les inserts (20).

## Claims

1. A fluidtight and interlocking assembly, of the type comprising:
- a plain end (4) of a first pipe element, which comprises a cylindrical outer surface (70),
- a socket end (8) of a second pipe element, and
- a composite seal for the fluidtight and interlocking assembly between the plain end (4) and the socket end (8),
- the socket end (8) comprising an anchoring groove (82) which is bounded by a base surface (92) extending substantially parallel to a central axis (X-X) and, on the inlet side of the socket, an annular front surface (90),
the seal comprising
- a ring (14) of elastic material extending along the central axis (X-X), which has a body (16), compressed radially between the socket end (8) and the plain end (4), and having an anchoring heel (18) accommodated in the anchoring groove (82), and
- a plurality of locking inserts (20) of rigid material at least partly embedded in the anchoring heel (18),
each locking insert (20) comprising a radially outer head (30) embedded at least partly in the anchoring heel (18) and intended to be applied in the anchoring groove (82), as well as a radially inner foot (32) intended to be applied against the plain end (4), the head (30) comprising a first radial projection (40,42) adapted to be applied against the base surface (92) of the anchoring groove (82), and first and second front projections (50,52) adapted to be applied against the annular front surface (90),
the second front projection (50,52) being radially offset from the first front projection (50,52),
the annular front surface (90) being connected directly to the base surface (92),
**characterised in that,** for any play between the outer surface (70) and the base surface (92) coming within a permitted range of tolerances, the insert is applied against the front surface (90) and against the base surface (92) when the plain end (4) and the socket end (8) are subjected to the internal pressure of the fluid.

2. An assembly according to claim 1, **characterised in that** the head (30) comprises at least a third front projection (54) which is offset radially from the first and second front projections and which is adapted to be applied against the annular front surface (90) of the anchoring groove (82).

3. An assembly according to claim 1 or claim 2, **characterised in that** the head (30) comprises at least a second radial projection (42,40) which is offset axially from the first radial projection, (40,42) and which is adapted to be applied against the base surface (92) of the anchoring groove (82).

4. An assembly according to claim 3, **characterised in that** the first (50,52) and second (52,50) front projections are connected by a first plane surface and the first (40,42) and the second (42,40) radial projections are connected by a second plane surface, and **in that** the angle V between the two surfaces is smaller than 90°.

5. An assembly according to claim 4, **characterised in that** the annular front surface (90) and the base surface (92) define between them an angle which is greater than the angle between the first plane surface and the second plane surface.

6. An assembly according to claim 5, **characterised in that** the base surface is cylindrical (92), in particular extending coaxially in relation to the central axis (X-X), and the annular front surface (90) is formed by an entry collar (80) of the socket end (8), the annular front surface (90) having an axial component directed in the insertion direction (I) of the plain end (4) into the socket end (8).

7. An assembly according to claim 5 or 6, **characterised in that** the annular front surface (90) extends at an angle of at least 80° in relation to the central axis (X-X).

8. An assembly according to any one of claims 1 to 7, **characterised in that,** viewed in meridian section along the central axis (X-X), the foot (32) comprises at least two engagement teeth (56,58,60) adapted to engage on the outer surface (70) of the plain end (4) and extending outside the ring (14).

9. An assembly according to any one of claims 1 to 8, **characterised in that** the foot (32) comprises an engagement abutment (62) which is embedded in the body (16) and which is arranged on the side axially opposite the head (30).

10. An assembly according to claim 9, **characterised in that,** viewed in meridian section along the central axis (X-X), the engagement abutment (62) has a profile which is more rounded than the profile of the engagement teeth (56,58,60).

11. An assembly according to claim 9 or 10, **characterised in that** the engagement abutment (62) comprises lateral surfaces (63) which, viewed axially along the central axis (X-X), are bevelled or rounded.

12. An assembly according to any one of claims 1 to 11, **characterised in that** the ring (14) comprises at least one recess (36) opposite a locking insert (20), and **in that** the recess (36) is radially open towards the outside so that one radial end of the head (30) is free of elastic material.

13. An assembly according to claim 12, **characterised in that** the head (30) of each locking insert (20) comprises a retaining lip (48) directed axially opposite the first front projection (50,52), and **in that** the recess (36) is axially open so that the retaining lip (48) is free of elastic material.

14. An assembly according to any one of claims 1 to 13, **characterised in that** the anchoring heel (18) and the body (16) are separated by at least one cavity, in particular a peripheral groove (22) or recesses aligned circumferentially with the inserts (20).

## Patentansprüche

1. Dichte und verriegelte Anordnung der Art mit:
- einem glatten Endstück (4) eines ersten Kanalisationselementes, welches eine zylindrische Außenfläche (70) aufweist,
- einem aufsteckbaren Endstück (8) eines zweiten Kanalisationselementes, und
- einer Verbunddichtung zum dichten und verriegelten Zusammenbau des glatten Endstücks (4) und des aufsteckbaren Endstücks (8),
wobei das aufsteckbare Endstück (8) eine Verankerungsrille (82) aufweist, die von einer sich praktisch parallel zu einer zentralen Achse (X-X) erstreckenden Bodenfläche (92) und auf der Seite des Aufsteckzugangs von einer ringförmigen Vorderfläche (90) begrenzt ist,
wobei die Dichtung aufweist:
- einen Ring (14) aus elastischem Material, der sich gemäß der zentralen Achse (X-X) erstreckt, mit einem Körper (16), radial zwischen dem aufsteckbarem Endstück (8) und dem glatten Endstück (4) zusammengedrückt, und mit einem in der Verankerungsrille (82) gelagerten Verankerungsansatz (18), und
- mehrere Verriegelungseinsätze (20) aus steifem Material, die zumindest teilweise in dem Verankerungsansatz (18) eingelassen sind,
wobei jeder Verriegelungseinsatz (20) einen radial nach außen gerichteten Kopf (30) aufweist, der zumindest teilweise in dem Verankerungsansatz (18) eingelassen und dafür bestimmt ist, sich in die Verankerungsrille (82) hinein zu drücken, sowie einen radial nach innen gerichteten Fuß (32), der dafür bestimmt ist, sich gegen das glatte Endstück (4) zu pressen, wobei der Kopf (30) einen ersten radialen Vorsprung (40, 42) aufweist, der dafür eingerichtet ist, sich gegen die Bodenfläche (92) der Verankerungsrille (82) zu pressen, und einen ersten und zweiten vorderen Vorsprung (50, 52), die dafür eingerichtet sind, sich gegen die ringförmige Vorderfläche (90) zu pressen,
wobei der zweite vordere Vorsprung (50, 52) bezüglich des ersten vorderen Vorsprungs (50, 52) radial versetzt ist,
wobei die ringförmige Vorderfläche (90) sich direkt an die Bodenfläche (92) anschließt, **dadurch gekennzeichnet, dass** sich der Einsatz (20) bei jedem Spiel zwischen der Außenfläche (70) und der Bodenfläche (92) innerhalb eines zulässigen Toleranzbereiches gegen die Vorderfläche (90) und gegen die Bodenfläche (92) presst, wenn das glatte Endstück (4) und das aufsteckbare Endstück (8) dem inneren Druck des Fluids ausgesetzt werden.

2. Anordnung gemäß Anspruch 1, **dadurch gekennzeichnet, dass** der Kopf (30) zumindest einen dritten vorderen Vorsprung (54) aufweist, der bezüglich des ersten und zweiten vorderen Vorsprungs radial versetzt angeordnet und dafür eingerichtet ist, sich gegen die ringförmige Vorderfläche (90) der Verankerungsrille (82) zu pressen.

3. Anordnung gemäß einem der Ansprüche 1 oder 2, **dadurch gekennzeichnet, dass** der Kopf (20) zumindest einen zweiten radialen Vorsprung (42, 40) aufweist, der bezüglich des ersten radialen Vorsprungs (40, 42) axial versetzt angeordnet und dafür eingerichtet ist, sich gegen die Bodenfläche (92) der Verankerungsrille (82) zu pressen.

4. Anordnung gemäß Anspruch 3, **dadurch gekennzeichnet, dass** der erste (50, 52) und zweite (52, 50) vordere Vorsprung durch eine erste ebene Fläche miteinander verbunden sind, und dass der erste (40, 42) und zweite (42, 40) radiale Vorsprung durch eine zweite ebene Fläche miteinander verbunden sind, und dass der Winkel (α) zwischen diesen beiden Flächen geringer als 90° ist.

5. Anordnung gemäß Anspruch 4, **dadurch gekennzeichnet, dass** die ringförmige Vorderfläche (90) und die Bodenfläche (92) zwischen sich einen Winkel definieren, der größer ist als der Winkel zwischen der ersten ebenen Fläche und der zweiten ebenen Fläche.

6. Anordnung gemäß Anspruch 5, **dadurch gekennzeichnet, dass** die Bodenfläche (92) zylindrisch ausgebildet ist und sich insbesondere koaxial bezüglich der zentralen Achse (X-X) erstreckt, und die ringförmige Vorderfläche (90) von einem Eingangskragen (80) des aufsteckbaren Endstücks (8) gebildet ist, wobei die ringförmige Vorderfläche (90) eine axiale Komponente aufweist, welche in die Einführrichtung (I) des glatten Endstücks (4) in das aufsteckbare Endstück (8) gerichtet ist.

7. Anordnung gemäß Anspruch 5 oder 6, **dadurch gekennzeichnet, dass** sich die ringförmige Vorderfläche (90) gemäß einem Winkel von zumindest 80° bezüglich der zentralen Achse (X-X) erstreckt.

8. Anordnung gemäß irgendeinem der Ansprüche 1 bis 7, **dadurch gekennzeichnet, dass** der Fuß (32), im Meridianschnitt entlang der zentralen Achse (X-X) gesehen, zumindest zwei Einhakzähne (56, 58, 60) aufweist, welche dafür eingerichtet sind, sich an der Außenfläche (70) des glatten Endstücks (4) festzuhaken, und welche sich außerhalb des Ringes (14) erstrecken.

9. Anordnung gemäß irgendeinem der Ansprüche 1 bis 8, **dadurch gekennzeichnet, dass** der Fuß (32) einen Einhakanschlag (62) aufweist, der in dem Körper (16) eingelassen und auf der dem Kopf (30) axial gegenüber liegenden Seite angeordnet ist.

10. Anordnung gemäß Anspruch 9, **dadurch gekennzeichnet, dass** der Einhakanschlag (62), im Meridianschnitt entlang der zentralen Achse (X-X) gesehen, ein Profil aufweist, das mehr abgerundet ist als das Profil der Einhakzähne (56, 58, 60).

11. Anordnung gemäß Anspruch 9 oder 10, **dadurch gekennzeichnet, dass** der Einhakanschlag (629 Seitenflächen (63) aufweist, welche in axialer Ansicht entlang der zentralen Achse (X-X) abgeschrägt oder abgerundet sind.

12. Anordnung gemäß irgendeinem der Ansprüche 1 bis 11, **dadurch gekennzeichnet, dass** der Ring (14) zumindest eine Aussparung (36) senkrecht zu einem Verriegelungseinsatz (20) aufweist, und dass die Aussparung (36) radial nach außen hin derart offen ist, dass ein radiales Ende des Kopfes (30) frei von elastischem Material ist.

13. Anordnung gemäß Anspruch 12, **dadurch gekennzeichnet, dass** der Kopf (30) jedes Verriegelungseinsatzes (20) einen Halteschnabel (48) aufweist, der axial in die entgegen gesetzte Richtung zu dem ersten vorderen Vorsprung (50, 52) gerichtet ist, und dass die Aussparung (36) axial derart offen ist, dass der Halteschnabel (48) frei von elastischem Material ist.

14. Anordnung gemäß irgendeinem der Ansprüche 1 bis 13, **dadurch gekennzeichnet, dass** der Verankerungsansatz (18) und der Körper (16) durch zumindest eine Ausnehmung voneinander getrennt sind, und zwar insbesondere durch eine Umfangsrille (22) oder durch mit den Einsätzen (20) umfangsmäßig ausgerichteten Aussparungen.
